# EUROPEAN PATENT APPLICATION

(11) **EP 1 571 771 A2**
(43) Date of publication of application: **07.09.2005**
(21) Application number: 05003898.3
(22) Date of filing: 23.02.2005
(51) Int. Cl.: H04J 14/02

(54) **System and method for communicating traffic between optical rings**

(30) Priority: 03.03.2004 US 792004
(71) Applicant: FUJITSU LIMITED, Kanagawa 211-8588 (JP)
(72) Inventor: Tian, Cechan, Plano, Texas 75025 (US); Kinoshita, Susumu, Fuchu-shi, Tokyo 183-0032 (JP)
(74) Representative: HOFFMANN EITLE

(57) **Abstract**

An optical network includes a first optical ring and a second optical ring. Each optical ring is operable to communicate optical traffic comprising a plurality of sub-bands. The first optical ring comprises a first interconnect node operable to filter traffic in a first sub-band from the first optical ring for communication to the second optical ring. The second optical ring comprises a second interconnect node operable to receive the filtered traffic in the first sub-band from the first interconnect node for communication in the second optical ring.

## Description

### TECHNICAL FIELD OF THE INVENTION

The present invention relates generally to the field of optical communication and, more specifically, to a system and method for communicating traffic between optical rings.

### BACKGROUND OF THE INVENTION

Telecommunications systems, cable television systems and data communication networks use optical networks to rapidly convey large amounts of information between remote points. In an optical network, information is conveyed in the form of optical signals through optical fibers. Optical fibers comprise thin strands of glass capable of transmitting the signals over long distances with very low loss.

Optical networks often employ wavelength division multiplexing (WDM) or dense wavelength division multiplexing (DWDM) to increase transmission capacity. In WDM and DWDM networks, a number of optical channels are carried in each fiber at disparate wavelengths. Network capacity is based on the number of wavelengths, or channels, in each fiber and the bandwidth, or size of the channels.

The topology in which WDM and DWDM networks are built plays a key role in determining the extent to which such networks are utilized. Ring topologies are common in today's networks. WDM add/drop units serve as network elements on the periphery of such optical rings. Add/drop equipment can be used to communicate traffic from one optical ring to another optical ring. Current methods of communicating optical traffic from one ring network to another include: (1) performing an optical-electrical-optical (OEO) conversion to communicate a signal to a second ring along an optical fiber and performing another OEO conversion at the second ring, (2) performing an optical-electrical conversion to communicate a signal to a second ring along an electrical link and performing an electrical-optical conversion at the second ring, and (3) dropping an optical signal from one ring and amplifying the signal to communicate it to another ring. These methods require various equipment, such as transponders and erbium doped fiber amplifiers (EDFAs).

### SUMMARY OF THE INVENTION

The present invention provides a system and method for communicating traffic between optical rings that substantially eliminates or reduces at least some of the disadvantages and problems associated with previous systems and methods for communicating optical traffic.

In accordance with a particular embodiment of the present invention, an optical network includes a first optical ring and a second optical ring. Each optical ring is operable to communicate optical traffic comprising a plurality of sub-bands. The first optical ring comprises a first interconnect node operable to filter traffic in a first sub-band from the first optical ring for communication to the second optical ring. The second optical ring comprises a second interconnect node operable to receive the filtered traffic in the first sub-band from the first interconnect node for communication in the second optical ring.

The first interconnect node may be operable to communicate the filtered traffic in the first sub-band to the second interconnect node without electrical conversion or amplification of the filtered traffic. The first interconnect node may comprise a plurality of cascaded sub-band filters operable to isolate traffic in the first sub-band from continued communication on the first optical ring through the first interconnect node.

The optical network may comprise a demux-mux module operable to selectively pass or terminate individual channels of the filtered traffic in the first sub-band before communication in the second optical ring. The second interconnect node may be operable to filter traffic in the first sub-band from the second optical ring for communication to the first optical ring. The first interconnect node may be operable to receive the filtered traffic in the first sub-band from the second interconnect node for communication in the first optical ring. The second interconnect node may be operable to communicate the filtered traffic in the first sub-band to the first interconnect node without electrical conversion or amplification of the filtered traffic.

In accordance with another embodiment, an optical network includes a first optical ring and a second optical ring. Each optical ring is operable to communicate optical traffic comprising a plurality of sub-bands. The first optical ring comprises a first interconnect node operable to selectively switch to the second optical ring traffic in a first sub-band from the first optical ring. The second optical ring comprises a second interconnect node operable to receive the switched traffic in the first sub-band from the first optical ring for communication in the second optical ring.

The first interconnect node may be operable to communicate the switched traffic in the first sub-band to the second interconnect node without electrical conversion or amplification of the filtered traffic. The first interconnect node may comprise a demultiplexer operable to demultiplex optical traffic received into its constituent sub-bands, a plurality of switch elements each operable to pass through for communication through the first interconnect node or switch to the second optical ring traffic in a respective sub-band and a multiplexer operable to multiplex traffic in each sub-band passed through for communication through the first interconnect node.

Technical advantages of particular embodiments of the present invention include an optical network with interconnect nodes providing the ability to communicate optical traffic between a plurality of optical rings without electrical conversion or amplification of the optical traffic. Accordingly, equipment and labor costs for the optical network may be reduced since particular transponders and amplifiers that would otherwise be required for such electrical conversion and/or amplification of traffic communicated between optical rings may not be needed. In addition, not requiring electrical conversions may provide greater traffic flexibility since all traffic is optical leading to fewer protocol limitations.

Other technical advantages will be readily apparent to one skilled in the art from the following figures, descriptions and claims. Moreover, while specific advantages have been enumerated above, various embodiments may include all, some or none of the enumerated advantages.

### BRIEF DESCRIPTION OF THE DRAWINGS

For a more complete understanding of particular embodiments of the invention and their advantages, reference is now made to the following descriptions, taken in conjunction with the accompanying drawings, in which:
FIGURE 1 is a block diagram illustrating an optical network, in accordance with a particular embodiment;
FIGURE 2 illustrates an example portion of the optical network of FIGURE 1 illustrating a ring interconnection, in accordance with a particular embodiment;
FIGURE 3 illustrates an example portion of an optical network illustrating another type of ring interconnection, in accordance with a particular embodiment;
FIGURE 4 illustrates an example portion of an optical network illustrating another type of ring interconnection, in accordance with a particular embodiment;
FIGURE 5 illustrates an example portion of an optical network illustrating another type of ring interconnection, in accordance with a particular embodiment;
FIGURE 6 illustrates an optical network with two interconnected optical rings, in accordance with a particular embodiment;
FIGURE 7 illustrates an optical network with three interconnected optical rings, in accordance with a particular embodiment;
FIGURE 8 illustrates an optical network with cascaded interconnected optical rings, in accordance with a particular embodiment; and
FIGURE 9 illustrates a method for communicating traffic between optical rings, in accordance with a particular embodiment of the present invention.

### DETAILED DESCRIPTION OF THE INVENTION

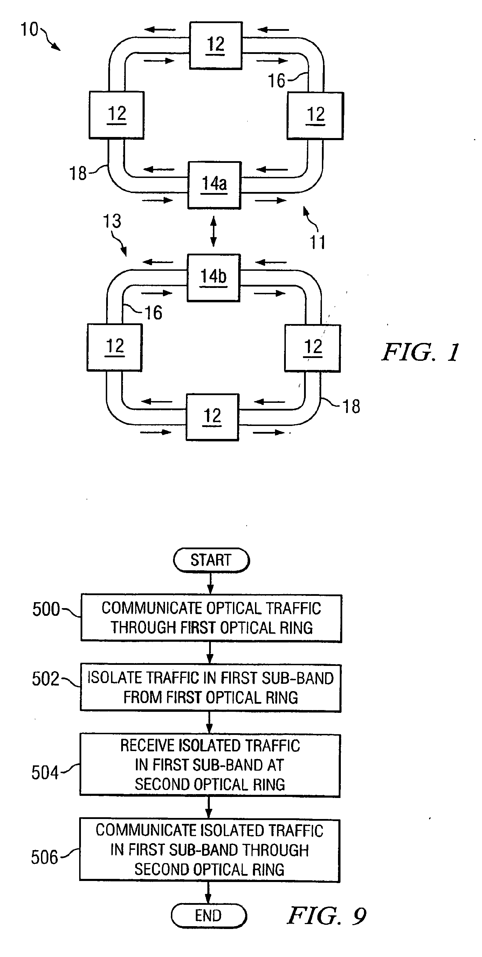

FIGURE 1 is a block diagram illustrating an optical network 10, in accordance with a particular embodiment. In accordance with this embodiment, network 10 includes optical rings 11 and 13. An optical ring may include, as appropriate, a single, unidirectional fiber, a single, bi-directional fiber or a plurality of uni- or bi-directional fibers. In the illustrated embodiment, optical rings 11 and 13 each includes a pair of unidirectional fibers, each transporting traffic in opposite directions, specifically a first fiber 16 and a second fiber 18. Fibers 16 and 18 connect a plurality of nodes 12 and 14. Network 10 is an optical network in which a number of optical channels are carried over a common path in disparate wavelengths/channels. Network 10 may be an wavelength division multiplexing (WDM), dense wavelength division multiplexing (DWDM) or other suitable multi-channel network. Network 10 may be used as a short-haul metropolitan network, a long-haul inter-city network or any other suitable network or combination of networks. In particular embodiments, nodes 12 and 14 may comprise a combination of one or more local nodes, such as sub-band nodes, or hub nodes, as further described below. While six nodes 12 and two nodes 14 are illustrated in network 10 (four nodes on each optical ring), network 10 may include fewer or greater than eight nodes in other embodiments.

Nodes 14 of optical network 10 are comprise interconnect nodes that provide for the communication of optical traffic from optical ring 11 to optical ring 13 and vice versa. As indicated above, nodes 14 may comprise sub-band nodes or hub nodes and may each be configured to isolate one or more particular sub-bands of optical traffic communicated on their respective rings for communication to the other optical ring. Such configuration may include any suitable elements, such as sub-band filters and demux-mux components with switch elements. Optical network 10 provides the ability to communicate traffic between optical rings 11 and 13 without regeneration, or electrical conversion, or amplification of traffic isolated from the optical rings for communication to another ring. Accordingly, equipment and labor costs for the optical network may be reduced since particular transponders and amplifiers that would otherwise be required for such regeneration and/or amplification may not be needed.

Referring to FIGURE 1, optical information signals are transmitted in different directions on fibers 16 and 18. The optical signals have at least one characteristic modulated to encode audio, video, textual, real-time, non-real-time and/or other suitable data. Modulation may be based on phase shift keying (PSK), intensity modulation (IM) and other suitable methodologies.

In the illustrated embodiment, the fibers 16 are clockwise fibers in which traffic is transmitted in a clockwise direction. Fibers 18 are counterclockwise fibers in which traffic is transmitted in a counterclockwise direction. Nodes 12 and 14 are each operable to passively add and drop traffic to and from the rings to which they are respectively coupled. In particular, each node 12 and 14 may receive traffic from local clients and may add that traffic to the ring to which it is coupled. At the same time, each node 12 and 14 may drop traffic it receives to local clients. As used throughout this description and the following claims, the term "each" means every one of at least a subset of the identified items. In adding and dropping traffic, nodes 12 and 14 may combine data from clients for transmittal in the rings 11 and 13 and may drop channels of data from the rings for clients. Traffic may be dropped so that it may be received at the local clients. Thus, traffic may be dropped and yet continue to circulate on a ring. Nodes 12 and 14 communicate the traffic on rings 11 and 13 regardless of the channel spacing of the traffic - thus providing "flexible" channel spacing in nodes 12 and 14. In particular embodiments of the present invention, traffic may be passively added to and/or dropped from the rings 11 and 13 by splitting and/or combining, which is without multiplexing/demultiplexing in the transport rings and/or separating parts of a signal in the ring. "Passively" in this context means the adding or dropping of channels without power, electricity and/or moving parts. An active device would thus use power, electricity or moving parts to perform work.

In particular embodiments, network 10 may be an Optical Unidirectional Path-Switched Ring (OUPSR) network in which traffic sent on one ring 11 or 13 from a first node 12 or 14 to a second node 12 or 14 is communicated from the first node to the second node over both fibers 16 and 18 of the ring. The second node may include components allowing the second node to select between the traffic arriving via fibers 16 and 18 so as to forward to a local client(s) the traffic from the ring that has a lower bit error rate (BER), a higher power level and/or any other appropriate and desirable characteristics. Alternatively, such components may select traffic from a designated fiber unless that traffic falls below/above a selected level of one or more operating characteristics (in which case, traffic from the other fiber may be selected). The use of such dual signals provides OUPSR protection or the allowance of traffic to be communicated from a first node 12 or 14 to a second node 12 or 14 over at least one of the fibers 16 and 18 of the ring in the event of a line break or other damage to the other of the rings 16 and 18.

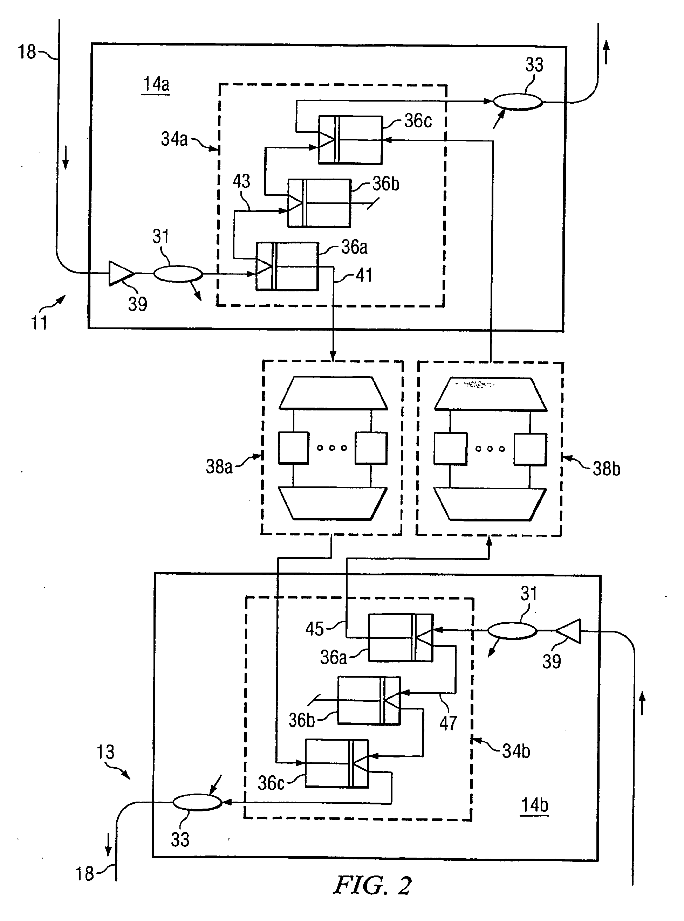

FIGURE 2 illustrates an example portion of optical network 10 of FIGURE 1 illustrating a ring interconnection, in accordance with a particular embodiment. Traffic communicated along rings 11 and 13 have matching power levels. Illustrated in FIGURE 2 are particular components of nodes 14a and 14b coupled to fibers 18 of rings 11 and 13. It should be understood that nodes 14a and 14b may also include other components, such as components coupled to fibers 16 of rings 11 and 13. In this embodiment, nodes 14a and 14b comprise sub-band nodes which are each able to block, or filter out, a particular sub-band of optical traffic from passing through the node. A sub-band is a portion of the bandwidth of the network. Each sub-band may carry none, one or a plurality of traffic channels. The traffic channels may be flexibly spaced within the sub-band. Traffic in sub-bands not rejected may be passed through to other components of the network, such as to other nodes. Such passed-through traffic may be rejected at another node in the network. The rejection of a particular sub-band at a sub-band node enables traffic in such sub-band to be added and dropped at the sub-band node without interference with traffic in the sub-band being communicated on the network.

Nodes 14a and 14b each include respective filter modules 34. Filter modules 34 filter out particular sub-bands from traffic passing through the nodes. Such filtered out traffic is communicated to another ring in the network. Filter modules 34 each include a set of cascaded sub-band filters 36 operable to filter out a particular sub-band of traffic. In this embodiment, each filter module 34 includes three cascaded sub-band filters 36 (filters 36a, 36b and 36c), however filter modules of other embodiments may include fewer or greater than three cascaded sub-band filters. Moreover, filter modules in other embodiments may include other types of filters. Traffic may be communicated from one ring to another through the filters if the traffic is in the transmission range of the particular filters implemented.

In the illustrated embodiment, channel-based demux-mux modules 38 are positioned between rings 11 and 13. Demux-mux modules 38 are able to allow particular channels, or wavelengths, of traffic to pass through the modules between rings 11 and 13. It should be understood that other embodiments may not include channel-based demux-mux modules 38 positioned between optical rings, thus allowing all channels of particular traffic filtered at a node 14 to pass to the other ring. Moreover, while demux-mux modules 38 are illustrated between nodes 14a and 14b, it should be understood that demux-mux modules 38 may constitute a part of the nodes in other embodiments.

In operation, traffic passing along fiber 18 of ring 11 enters node 14a where it is amplified at amplifier 39. At coupler 31, the traffic may be passively dropped for use at a local client. The traffic then enters filter module 34a where it encounters sub-band filter 36a. Sub-band filter 36a filters out a particular sub-band of the traffic. The filtered out sub-band is communicated along link 41 to channel-based demux-mux module 38a. As discussed above, other embodiments may not include channel-based demux-mux modules 38. The channels of the traffic allowed to pass through demux-mux module 38a (which may include all channels of the traffic entering the module) then pass to filter module 34b of node 14b.

The traffic not filtered out by sub-band filter 36a of filter module 34a of node 14a is communicated along link 43 to sub-band filter 36b. Sub-band filter 36b is a filter that filters traffic in the same sub-band as that of the traffic filtered at sub-band filter 36a. Traffic not filtered out by sub-band filter 36b passes to sub-band filter 36c which is similar to sub-band filters 36a and 36b. The use of three cascaded filters increases the isolation ratio of filtered out traffic (using just one or two filters to filter out a particular sub-band may not achieve a desired isolation ratio). For example, in particular embodiments, a single filter may block only 90% of traffic in a particular sub-band while the combination of multiple filters may block closer to 100% of traffic in such sub-band.

At sub-band filter 36c, traffic in the sub-band filtered out at filter module 34b of node 14b that has passed through demux-mux module 38b is added to the traffic passing through filter module 34a of node 14a where it passes to coupler 33. At coupler 33, local client traffic may be added to ring 11 for communication to other network components.

Traffic passing along fiber 18 of ring 13 entering node 14b is similarly treated as that described above with respect to traffic passing along fiber 18 of ring 11 entering node 14a. The traffic entering node 14b is amplified at amplifier 39. At coupler 31, the traffic may be passively dropped for use at a local client. The traffic then enters filter module 34b where it encounters sub-band filter 36a. Sub-band filter 36a filters out a particular sub-band of the traffic. The filtered out sub-band is communicated along link 45 to channel-based demux-mux module 38b. The channels of the traffic allowed to pass through demux-mux module 38b (which may include all channels of the traffic entering the module) then pass to filter module 34a of node 14a where they are added to ring 11 as described above.

The traffic not filtered out by sub-band filter 36a of filter module 34b is communicated along link 47 to sub-band filter 36b. Sub-band filter 36b is a filter that filters traffic in the same sub-band as that of the traffic filtered at sub-band filter 36a of filter module 34b. Traffic not filtered out by sub-band filter 36b passes to sub-band filter 36c which is similar to sub-band filters 36a and 36b.

At sub-band filter 36c, traffic in the sub-band filtered out at filter module 34a of node 14a that has passed through demux-mux module 38a is added to the traffic passing through filter module 34b of node 14b where it passes to coupler 33. At coupler 33, local client traffic may be added to ring 13 for communication to other network components.

Therefore, in the embodiment illustrated in FIGURE 2, traffic in a particular sub-band (e.g., sub-band A) communicated along ring 11 entering node 14a is filtered out at filter module 34a for communication to ring 13. Traffic not in sub-band A communicated along ring 11 entering node 14a passes through node 14a to other components of ring 11. Traffic in sub-band A communicated along ring 13 is filtered out at filter module 34b for communication to ring 11. Traffic not in sub-band A communicated along ring 13 entering node 14b passes through node 14b to other components of ring 13.

Thus, the illustrated embodiment provides for optically transparent ring interconnection such that no OEO conversions of filtered traffic may be required to communicate traffic between rings. Moreover, amplification may not be required of such traffic for communication between rings. Accordingly, expenses are reduced since certain conversion and amplification equipment is not required. Moreover, not requiring electrical conversions provides greater traffic flexibility since all traffic is optical leading to fewer protocol limitations.

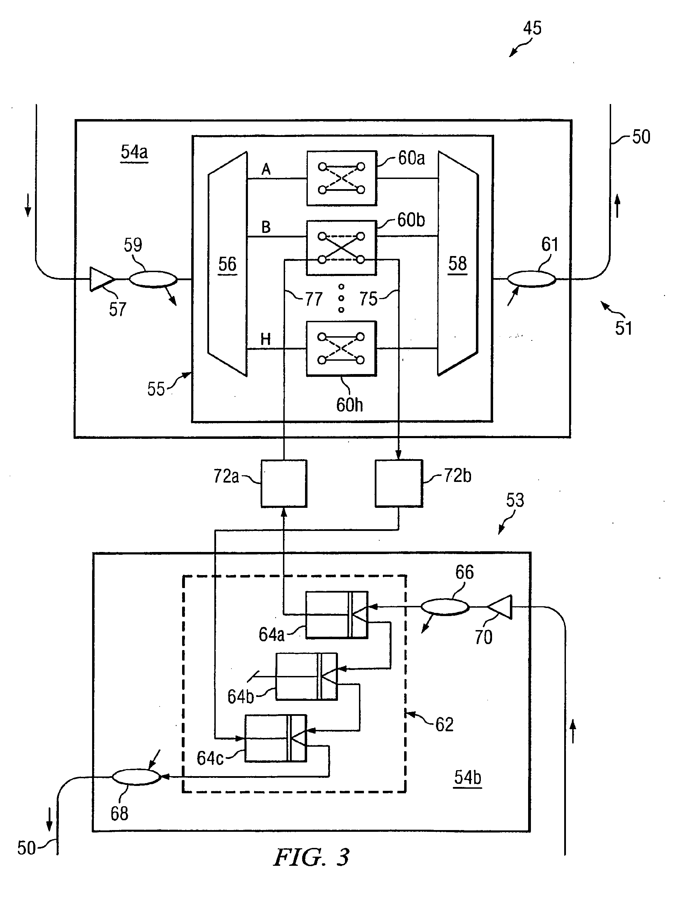

FIGURE 3 illustrates an example portion of an optical network 45 illustrating another type of ring interconnection, in accordance with a particular embodiment. Illustrated portions of optical network 45 include optical rings 51 and 53 each with fibers 50. Optical network 45 may also include other, non-illustrated components. For example, rings 51 and 53 may each include fibers carrying optical traffic in opposite directions from fibers 50.

Optical ring 51 includes node 54a, and optical ring 53 includes node 54b. In this embodiment, node 54a comprises a hub node, and node 54b comprises a sub-band node. Hub node 54a is able to selectively pass or block particular sub-bands of the traffic entering the node. Traffic in blocked sub-bands not continuing on ring 51 may be dropped to other network components at the node. The particular sub-bands that are passed or blocked may be dynamically changed during operation of the network.

Hub node 54a includes hub unit 55, amplifier 57, drop coupler 59 and add coupler 61. Hub unit 55 selectively passes or drops sub-bands of traffic entering the node. Hub unit 55 includes a demultiplexer 56, a multiplexer 58 and switch elements 60. In particular embodiments, demultiplexer 56 and multiplexer 58 may comprise arrayed waveguides or fiber Bragg gratings. In operation, traffic received at hub unit 55 is demultiplexed at demultiplexer 56 into its constituent sub-bands. Switch elements 60 may be individually set to a "pass" position or a "cross" position. In the pass position, a switch element forwards to multiplexer 58 the sub-band it receives from demultiplexer 56. In the cross position, a switch element drops the sub-band it receives from demultiplexer 56 to be communicated to ring 53 and adds to ring 51 any traffic received at the switch element from ring 53. While switch elements 60 are illustrated as 2 x 2 switches, it should be understood that other suitable switches or optical cross connects may be utilized in other embodiments. Moreover, while in the illustrated embodiment demultiplexer 56 demultiplexes optical traffic into eight sub-bands to be communicated to eight respective switch elements 60, it should be understood that hub units in other embodiments may demultiplex optical traffic into any number of constituent channels or sub-bands. Traffic from switch elements 60 intended to continue on ring 51 is multiplexed into one optical signal for communication through hub node 54a.

As indicated above, node 54b of optical ring comprises a sub-band node. Sub-band node 54b is similar in configuration and operation to sub-band nodes 14a and 14b of FIGURE 2. Sub-band node 54b includes filter module 62 with cascaded filters 64a, 64b and 64c, drop coupler 66, add coupler 68 and amplifier 70. Also illustrated are optional channel-based demux-mux modules 72 which are similar in configuration and function to demux-mux modules 38 of FIGURE 2.

In operation, traffic passing along fiber 50 of ring 51 enters node 54a where it is amplified at amplifier 57. At coupler 59, the traffic may be passively dropped for use at a local client. The traffic then enters hub unit 55 where it is demultiplexed into its constituent sub-bands as described above. Selective sub-bands of the traffic may be dropped at switch elements 60 for communication to optical ring 53. In the illustrated embodiment, switch element 60b is configured to drop sub-band B to link 75 for communication to ring 53, while switch elements 60a and 60c-60h are configured to pass sub-bands A and C-H, respectively, to multiplexer 58. Another link 77 is also coupled to switch element 60b to add to ring 51 traffic in sub-band B from ring 53. While switch element 60b is the only switch element illustrated as being coupled to links for the communication of sub-band traffic to and from ring 53, it should be understood that the other switch elements may also be coupled to links for such purposes. This allows hub unit 55 of hub node 54a to dynamically change the particular sub-bands dropped to (and added from) ring 53. For example, in other embodiments, switch elements 60 may be configured to only drop demultiplexed traffic in sub-band A to ring 53 while all other demultiplexed sub-band traffic continues along ring 51. Multiplexed traffic exiting hub unit 55 travels to add coupler 61 where it may be combined with added local client traffic.

The optical traffic dropped at hub node 54a, in this case traffic in sub-band B, is communicated to demux-mux module 72b where particular channels of such traffic may be pass or blocked. Traffic passing through demux-mux module 72b is added to ring 53 at filter module 62 of sub-band node 54b.

As indicated above, sub-band node 54b functions in a similar manner to sub-band nodes 14a and 14b of FIGURE 2. Traffic entering sub-band node 54b is amplified at amplifier 70 and is communicated to coupler 66 which may drop traffic to a local client. The traffic enters filter module 62 which filters out a particular sub-band of traffic for communication to ring 51 (through optional demux-mux module 72a). The sub-band filtered out for communication to ring 51 is the same sub-band dropped from ring 51 at hub node 54a, in this case sub-band B. Channels of the filtered out sub-band passing through demux-mux module 72a are added to ring 51 along link 77. at switch element 60b.

At sub-band filter 64c, traffic in the sub-band dropped at hub node 54a that has passed through demux-mux module 72b is added to the traffic passing through filter module 62 where it passes to coupler 68. At coupler 68, local client traffic may be added to ring 53 for communication to other network components.

Therefore, in the embodiment illustrated in FIGURE 3, traffic in a particular sub-band (e.g., sub-band B) communicated along ring 51 entering hub node 54a is dropped at hub unit 55 for communication to ring 53. Traffic not in sub-band B communicated along ring 51 entering hub node 54a passes through node 54a to other components of ring 51. Traffic in sub-band B communicated along ring 53 is filtered out at filter module 62 of sub-band node 54b for communication to ring 51. Traffic not in sub-band B communicated along ring 53 entering sub-band node 54b passes through node 54b to other components of ring 53. Therefore, the illustrated embodiment provides for optically transparent ring interconnection between a hub node and a sub-band node such that no OEO conversions or amplification may be required to communicate traffic between rings.

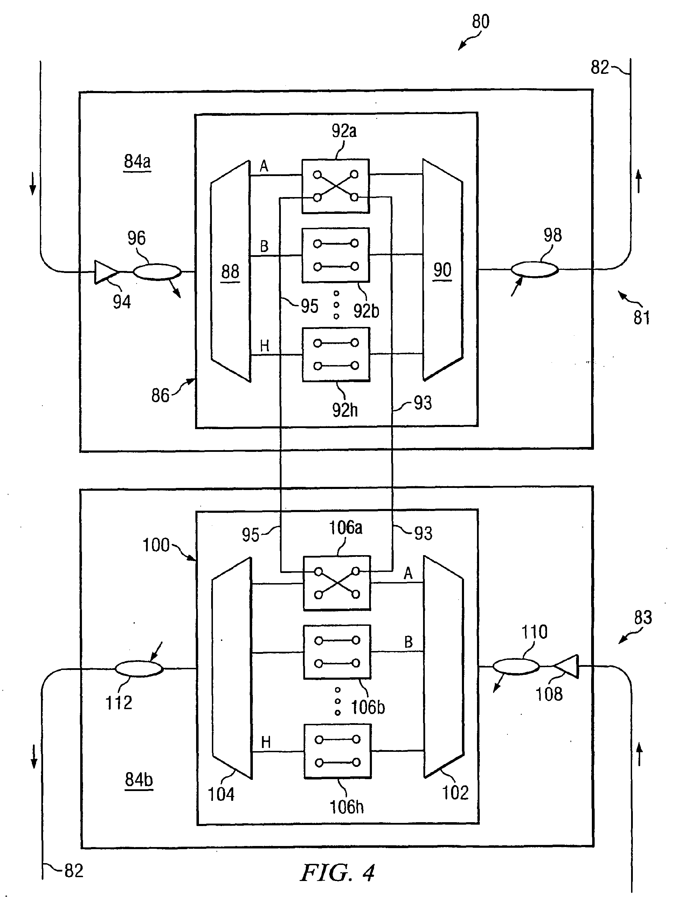

FIGURE 4 illustrates an example portion of an optical network 80 illustrating another type of ring interconnection, in accordance with a particular embodiment. Illustrated portions of optical network 80 include optical rings 81 and 83 each with fibers 82. Optical network 80 may also include other, non-illustrated components. For example, rings 81 and 83 may each include fibers carrying optical traffic in opposite directions from fibers 82.

Optical ring 81 includes node 84a, and optical ring 83 includes node 84b. In this embodiment, nodes 84a and 84b each comprises a hub node similar to hub node 54a of FIGURE 3. Hub node 84a includes hub unit 86, amplifier 94, drop coupler 96 and add coupler 98. Hub unit 86 selectively passes or drops sub-bands of traffic entering the node. Hub unit 86 includes a demultiplexer 88, a multiplexer 90 and switch elements 92. In the illustrated embodiment, switch element 92a is set to drop traffic in demultiplexed sub-band A for communication to ring 83. Such traffic is dropped from switch element 92a along link 93 for communication to ring 83. Traffic from ring 83 is added to ring 81 along link 95 at switch element 92a.

Hub node 84b of ring 83 includes hub unit 100, amplifier 108, drop coupler 110 and add coupler 112. Hub unit 100 includes a demultiplexer 102, a multiplexer 104 and switch elements 106. In the illustrated embodiment, switch element 106a is set to drop traffic in demultiplexed sub-band A for communication to ring 81. Such traffic is dropped from switch element 106a along link 95 for communication to ring 81. Traffic from ring 81 is added to ring 83 along link 93 at switch element 106a.

While hub nodes 84a and 84b are illustrated as communicating traffic in sub-band A between rings 81 and 83, hub nodes 84a and 84b may be dynamically changed to alter the sub-bands of traffic communicated between the rings as indicated above with respect to hub node 54b of

### FIGURE 3.

The illustrated components of optical network 80 allow for the interconnection of rings 81 and 83 such that traffic may be transparently communicated between the rings without electrical conversion or amplification. It should be understood that channel-based demux-mux modules may be implemented between rings 81 and 83, as part of nodes 84 or otherwise, to selectively pass only certain channels of sub-band traffic between the rings as illustrated and described above with respect to FIGURES 2 and 3.

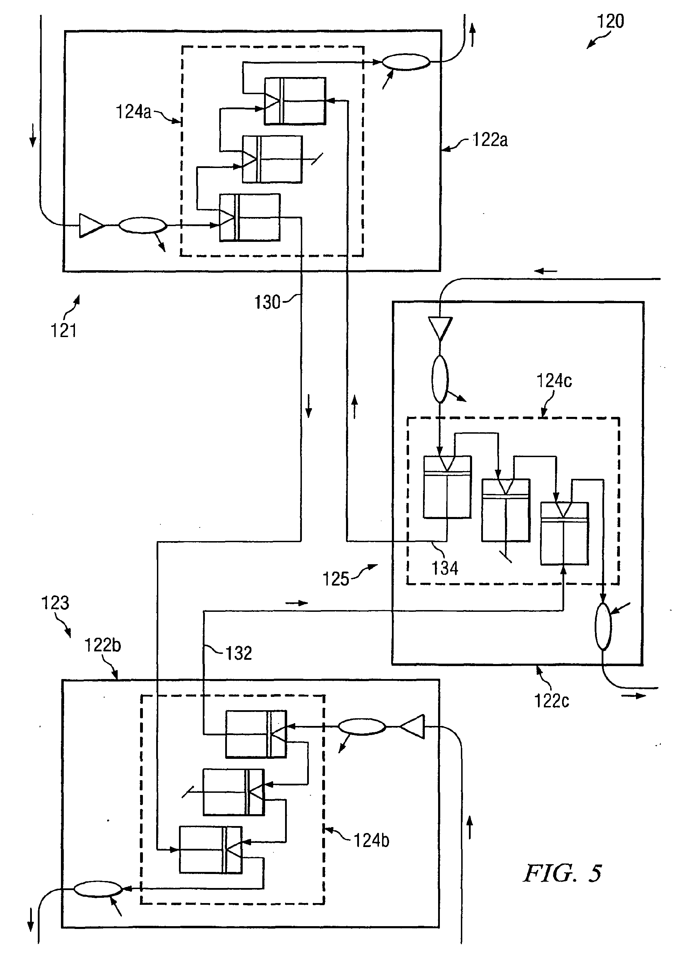

FIGURE 5 illustrates an example portion of an optical network 120 illustrating another type of ring interconnection, in accordance with a particular embodiment. Illustrated portions of optical network 120 include three optical rings 121, 123 and 125 interconnected through three sub-band nodes 122. Ring 121 includes sub-band node 122a, ring 123 includes sub-band node 122b and ring 125 includes sub-band node 122c. Sub-band nodes 122 each filter out traffic in the same sub-band for communication to another optical ring.

Sub-band nodes 122 are similar in configuration and function to sub-band nodes 14 of FIGURE 2. Sub-band nodes 122 each include a respective hub unit 124 with three cascaded filters for the filtering of a sub-band for communication to another optical ring. Sub-band node 122a of ring 121 filters out traffic in a particular sub-band for communication to ring 125 through link 130. Sub-band node 122b of ring 123 filters out traffic in the sub-band for communication to ring 125 through link 132. Sub-band node 122c of ring 125 filters out traffic in a particular sub-band for communication to ring 121 through link 134. The illustrated components of network 120 provide for optically transparent ring interconnection of three optical rings. As indicated above, more than three optical rings may also be connected in a similar manner.

While not specifically illustrated with respect to this embodiment, it should be understood that channel-based demux-mux modules may be positioned between the rings to limit the communication of traffic in particular channels from one ring to another, as discussed with previously-described embodiments.

As illustrated, optical network 120 includes three sub-band nodes 122 for ring interconnection. However, it should be understood that one, two or all three nodes 122 may be replaced by hub nodes similar to hub node 54a of FIGURE 3. In this case, network 120 may provide optically transparent ring interconnection between the three rings via two sub-band nodes and one hub node, one sub-band node and two hub nodes or three hub nodes. The interconnection of two rings via a sub-band node of one ring and a hub node of another ring is illustrated and described with respect to FIGURE 3, and the interconnection of two rings via two hub nodes is illustrated and described with respect to FIGURE 4. The present invention contemplates optically transparent ring interconnection between any number of optical rings through any suitable combination of sub-band nodes and/or hub nodes.

While example ring interconnections illustrated and described with respect to FIGURES 2, 3, 4 and 5 illustrate the connection of one fiber (a fiber carrying traffic in a counterclockwise direction) of a ring with one fiber (also a fiber carrying traffic in a counterclockwise direction) of another ring, it should be understood that other fibers of the rings (e.g., other fibers carrying traffic in opposite directions) may also be similarly connected.

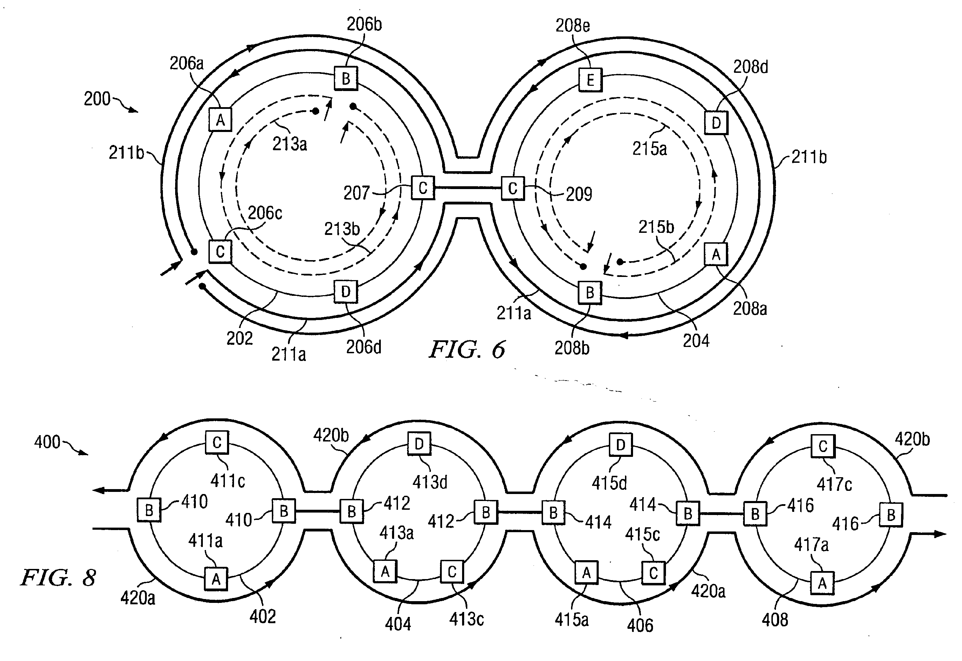

FIGURE 6 illustrates an optical network 200 with optical rings 202 and 204, in accordance with a particular embodiment. Optical rings 202 and 204 may each include fibers carrying optical traffic in opposite directions for OUPSR protection. Optical ring 202 includes sub-band nodes 206. In the illustrated embodiment, sub-band node 206a is operable to block traffic in sub-band A, sub-band node 206b is operable to block traffic in sub-band B, sub-band node 206c is operable to block traffic in sub-band C and sub-band node 206d is operable to block traffic in sub-band D. Optical ring 204 includes sub-band nodes 208. In the illustrated embodiment, sub-band node 208a is operable to block traffic in sub-band A, sub-band node 208b is operable to block traffic in sub-band B, sub-band node 208d is operable to block traffic in sub-band D and sub-band node 208e is operable to block traffic in sub-band E.

Optical ring 202 includes a node 207 that interconnects with a node 209 of optical ring 204. In the illustrated embodiment, nodes 207 and 209 are able to communicate traffic in sub-band C between the rings. Nodes 207 and 209 may comprise sub-band nodes with sub-band C filter modules for communicating traffic between rings 202 and 204, as illustrated and described with respect to nodes 14 of FIGURE 2, or may comprise hub nodes with hub units having switch elements configured to drop traffic in sub-band C for communication between the rings, as illustrated and described with respect to nodes 84 of FIGURE 4. In particular embodiments, one of nodes 207 and 209 may comprise a sub-band node, and the other may comprise a hub node.

The illustrated embodiment shows sub-band C traffic 211 that is added to the network at sub-band node 206c of ring 202. Traffic 211a is communicated in one direction through the network, while traffic 211b is communicated in the opposite direction. Since nodes 207 and 209 are configured to communicate sub-band C traffic between the rings, traffic 211 is illustrated as traveling around both rings 202 and 204. Moreover, traffic in sub-bands other than sub-band C will not be filtered out or otherwise dropped for communication from one ring to another. Thus traffic 213 which is in sub-band B and added to the network at sub-node node 206b of ring 202 remains in ring 202 and is not communicated to ring 204. In addition, traffic 215 which is also in sub-band B and added to the network at sub-node node 208b of ring 204 remains in ring 204 and is not communicated to ring 202.

Thus, optical network 200 illustrates an additional example of optically transparent ring interconnection. As indicated above, the interconnection nodes may comprise sub-band nodes or hub nodes. Some of the optical traffic may comprise intra-ring traffic which is broadcast to all nodes in the ring, while other optical traffic may comprise inter-ring traffic which is broadcast to both rings. In both cases, the optical traffic is OUPSR-protected in the event of a fiber failure.

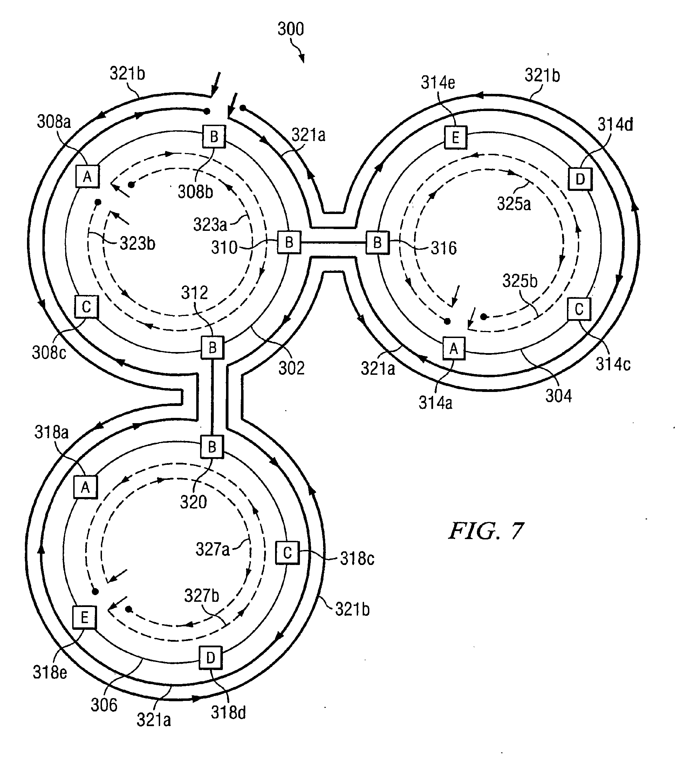

FIGURE 7 illustrates an optical network 300 with optical rings 302, 304 and 306, in accordance with a particular embodiment. Optical rings 302, 304 and 306 may each include fibers carrying optical traffic in opposite directions for OUPSR protection.

Optical ring 302 includes sub-band nodes 308. In the illustrated embodiment, sub-band node 308a is operable to block traffic in sub-band A, sub-band node 308b is operable to block traffic in sub-band B and sub-band node 308c is operable to block traffic in sub-band C. Optical ring 304 includes sub-band nodes 314. In the illustrated embodiment, sub-band node 314a is operable to block traffic in sub-band A, sub-band node 314c is operable to block traffic in sub-band C, sub-band node 314d is operable to block traffic in sub-band D and sub-band node 314e is operable to block traffic in sub-band E. Optical ring 306 includes sub-band nodes 318. In the illustrated embodiment, sub-band node 318a is operable to block traffic in sub-band A, sub-band node 318c is operable to block traffic in sub-band C, sub-band node 318d is operable to block traffic in sub-band D and sub-band node 318e is operable to block traffic in sub-band E.

Optical ring 302 includes a node 310 that interconnects with a node 316 of optical ring 304 and a node 312 that interconnects with a node 320 of optical ring 306. In the illustrated embodiment, nodes 310, 312, 316 and 320 are able to communicate traffic in sub-band B between the rings. Nodes 310, 312, 316 and 320 may comprise sub-band nodes with sub-band B filter modules for communicating traffic between rings 302, 304 and 306, as illustrated and described with respect to nodes 14 of FIGURE 2, or may comprise hub nodes with hub units having switch elements configured to drop traffic in sub-band B for communication between the rings, as illustrated and described with respect to nodes 84 of FIGURE 4. In particular embodiments, some of nodes 310, 312, 316 and 320 may comprise sub-band nodes, while the other nodes comprise hub nodes.

The illustrated embodiment shows sub-band B traffic 321 that is added to the network at sub-band node 308b of ring 302. Traffic 321a is communicated in one direction through the network, while traffic 321b is communicated in the opposite direction. Since nodes 310, 312, 316 and 320 are configured to communicate sub-band B traffic between rings 302, 304 and 306, traffic 321 is illustrated as traveling around all three rings 302, 304 and 306. Moreover, traffic in sub-bands other than sub-band B will not be filtered out or otherwise dropped for communication from one ring to another. Thus traffic 323 which is in sub-band A and added to the network at sub-node node 308a of ring 302 remains in ring 302 and is not communicated to either ring 304 or 306. Traffic 325 which is in sub-band A and added to the network at sub-node node 314a of ring 304 remains in ring 304 and is not communicated to either ring 302 or 306. In addition, traffic 327 which is in sub-band E and added to the network at sub-node node 318e of ring 306 remains in ring 306 and is not communicated to either ring 302 or 304.

Thus, optical network 300 illustrates an example of optically transparent ring interconnection between three optical rings. As indicated above, the interconnection nodes may comprise sub-band nodes or hub nodes. Some of the optical traffic may comprise intra-ring traffic which is broadcast to all nodes in the ring, while other optical traffic may comprise inter-ring traffic which is broadcast to both rings. In both cases, the optical traffic is OUPSR-protected in the event of a fiber failure.

FIGURE 8 illustrates an optical network 400 with cascaded optical rings 402, 404, 406 and 408, in accordance with a particular embodiment. Optical rings 402, 404, 406 and 408 may each include fibers carrying optical traffic in opposite directions for OUPSR protection.

Optical ring 402 includes nodes 410 for ring interconnection and sub-band nodes 411, optical ring 404 includes nodes 412 for ring interconnection and sub-band nodes 413, optical ring 406 includes nodes 414 for ring interconnection and sub-band nodes 415; and optical ring 408 includes nodes 416 for ring interconnection and sub-band nodes 417. Ring interconnection nodes 410, 412, 414 and 416 of rings 402, 404, 406 and 408, respectively, may comprise either sub-band nodes, as described above with respect to nodes 14 of FIGURE 2, or hub nodes, as described above with respect to nodes 84 of FIGURE 4.

The illustrated embodiment shows sub-band B traffic 420 communicated through the network from one ring to another. Traffic 420a travels through rings 402, 404, 406 and 408 in that order. Traffic 420b travels through rings 408, 406, 404 and 402 in that order. Interconnection nodes 410, 412, 414 and 416 filter out or drop the sub-band B traffic so that it is communicated between the rings. The illustrated configuration may be used for the application of wavelength services. As illustrated, an OUPSR-protected pipe can be built from one end of the cascaded rings to the other. Limitations may include optical budget (tilt and optical signal-to-noise ratio). When necessary, electrical regeneration may be used in the system.

As described with respect to the illustrated embodiments, particular embodiments of the present invention provide for optically transparent ring interconnection without electrical regeneration and optical amplification. The optically transparent ring interconnection provides transparent tunnels for selected wavelengths to be communicated across and through the rings. The ring interconnections may reduce the cost of equipment needed to communicate traffic between optical rings. In some embodiments, interconnected rings may include interoffice (IOF) rings and smaller, access rings. The interconnection of rings may be dynamically controlled. For example, when using hub nodes to interconnect rings an administrator may change the sub-band of traffic communicated by altering switch elements of the hub nodes.

Transparent ring interconnection between sub-nodes of optical rings may be implemented as described above with respect to the connection of rings 11 and 13 of FIGURE 2, transparent ring interconnection between a sub-node and a hub node may be implemented as described above with respect to the connection of rings 51 and 53 of FIGURE 3, and transparent ring interconnection between hub nodes may be implemented as described above with respect to the connection of rings 81 and 83 of FIGURE 4.

FIGURE 9 illustrates a method for communicating traffic between optical rings, in accordance with a particular embodiment of the present invention. The method begins at step 500 where optical traffic is communicated through a first optical ring. The optical traffic may comprise a plurality of sub-bands of traffic. At step 502, traffic in a first sub-band of the plurality of sub-bands is isolated at a first interconnect node of the first optical ring. In particular embodiments, such isolation may include filtering the traffic in the first sub-band using one or more filters, such as a plurality of cascaded filters. In some embodiments, such isolation may include demultiplexing optical traffic received at the first interconnect node, selectively dropping the traffic in the first sub-band using a switch module that receives the traffic in the first sub-band, passing the demultiplexed traffic not in the first sub-band and multiplexing the passed traffic for further communication through the first interconnect node and the first optical ring.

At step 504, the isolated traffic in the first sub-band is received at a second optical ring. In some embodiments, a individual channels of the isolated traffic in the first sub-band may be terminated at a demux-mux unit such that receiving the isolated traffic in the first sub-band comprises receiving individual channels not terminated, or passed, at the demux-mux unit. In particular embodiments, the isolated traffic is communicated to the second optical ring without electrical conversion or amplification of the isolated traffic. At step 506, the isolated traffic in the first sub-band is communicated through the second optical ring. Particular embodiments may also include communication of traffic in the first sub-band from the second optical ring to the first optical ring in a similar manner as that described above with respect to the communication of traffic from the first optical ring to the second optical ring.

Some of the steps illustrated in FIGURE 9 may be combined, modified or deleted where appropriate, and additional steps may also be added to the flowchart. Additionally, steps may be performed in any suitable order without departing from the scope of the invention.

Although the present invention has been described in detail with reference to particular embodiments, it should be understood that various other changes, substitutions, and alterations may be made hereto without departing from the spirit and scope of the present invention. For example, although the present invention has been described with reference to a number of elements included within optical networks, rings, sub-band nodes, hub nodes, filter modules and hub units, these elements may be combined, rearranged or positioned in order to accommodate particular routing architectures or needs. In addition, any of these elements may be provided as separate external components to each other where appropriate. The present invention contemplates great flexibility in the arrangement of these elements as well as their internal components.

Numerous other changes, substitutions, variations, alterations and modifications may be ascertained by those skilled in the art and it is intended that the present invention encompass all such changes, substitutions, variations, alterations and modifications as falling within the spirit and scope of the appended claims.

## Claims

1. An optical network, comprising:
a first optical ring and a second optical ring, each optical ring operable to communicate optical traffic comprising a plurality of sub-bands;
the first optical ring comprising a first interconnect node, the first interconnect node operable to filter traffic in a first sub-band from the first optical ring for communication to the second optical ring; and
the second optical ring comprising a second interconnect node, the second interconnect node operable to receive the filtered traffic in the first sub-band from the first interconnect node for communication in the second optical ring.

2. The optical network of Claim 1, wherein the first interconnect node is operable to communicate the filtered traffic in the first sub-band to the second interconnect node without electrical conversion of the filtered traffic.

3. The optical network of Claim 1, wherein the first interconnect node is operable to communicate the filtered traffic in the first sub-band to the second interconnect node without amplification of the filtered traffic.

4. The optical network of Claim 1, wherein the first interconnect node comprises a plurality of cascaded sub-band filters operable to isolate traffic in the first sub-band from continued communication on the first optical ring through the first interconnect node.

5. The optical network of Claim 1, further comprising a demux-mux module operable to selectively pass or terminate individual channels of the filtered traffic in the first sub-band before communication in the second optical ring.

6. The optical network of Claim 1, wherein:
the second interconnect node is operable to filter traffic in the first sub-band from the second optical ring for communication to the first optical ring;
the first interconnect node is operable to receive the filtered traffic in the first sub-band from the second interconnect node for communication in the first optical ring; and
wherein the second interconnect node is operable to communicate the filtered traffic in the first sub-band to the first interconnect node without electrical conversion or amplification of the filtered traffic.

7. The optical network of Claim 1, wherein:
the second interconnect node comprises a hub node operable to selectively switch to the first optical ring traffic in the first sub-band from the second optical ring;
the first interconnect node operable to receive the switched traffic in the first sub-band from the second optical ring for communication in the first optical ring; and
wherein the second interconnect node is operable to communicate the switched traffic in the first sub-band to the first interconnect node without electrical conversion or amplification of the filtered traffic.

8. An optical network, comprising:
a first optical ring and a second optical ring, each optical ring operable to communicate optical traffic comprising a plurality of sub-bands;
the first optical ring comprising a first interconnect node operable to selectively switch to the second optical ring traffic in a first sub-band from the first optical ring; and
the second optical ring comprising a second interconnect node, the second interconnect node operable to receive the switched traffic in the first sub-band from the first optical ring for communication in the second optical ring.

9. The optical network of Claim 8, wherein the first interconnect node is operable to communicate the switched traffic in the first sub-band to the second interconnect node without electrical conversion of the filtered traffic.

10. The optical network of Claim 8, wherein the first interconnect node is operable to communicate the switched traffic in the first sub-band to the second interconnect node without amplification of the filtered traffic.

11. The optical network of Claim 8, wherein the first interconnect node comprises:
a demultiplexer operable to demultiplex optical traffic received into its constituent sub-bands;
a plurality of switch elements each operable to pass through for communication through the first interconnect node or switch to the second optical ring traffic in a respective sub-band; and
a multiplexer operable to multiplex traffic in each sub-band passed through for communication through the first interconnect node.

12. The optical network of Claim 8, further comprising a demux-mux module operable to selectively pass or terminate individual channels of the switched traffic in the first sub-band before communication in the second optical ring.

13. The optical network of Claim 8, wherein:
the second interconnect node is operable to selectively switch to the first optical ring traffic in the first sub-band from the second optical ring;
the first interconnect node operable to receive the switched traffic in the first sub-band from the second optical ring for communication in the first optical ring; and
wherein the second interconnect node is operable to communicate the switched traffic in the first sub-band to the first interconnect node without electrical conversion or amplification of the filtered traffic.

14. A method for communicating traffic between optical rings, comprising:
communicating optical traffic through a first optical ring, the optical traffic comprising a plurality of sub-bands;
filtering, for communication to a second optical ring, traffic in a first sub-band from the first optical ring at a first interconnect node of the first optical ring;
receiving the filtered traffic in the first sub-band from the first interconnect node at a second interconnect node of the second optical ring for communication in the second optical ring.

15. The method of Claim 14, wherein the filtered traffic in the first sub-band is communicated to the second interconnect node without electrical conversion of the filtered traffic.

16. The method of Claim 14, wherein the filtered traffic in the first sub-band is communicated to the second interconnect node without amplification of the filtered traffic.

17. The method of Claim 14, further comprising isolating traffic in the first sub-band from continued communication on the first optical ring through the first interconnect node at a plurality of cascaded sub-band filters of the first interconnect node.

18. The method of Claim 14, further comprising selectively passing or terminating at a demux-mux unit individual channels of the filtered traffic in the first sub-band before communication in the second optical ring.

19. The method of Claim 14, further comprising:
filtering, for communication to the first optical ring, traffic in the first sub-band from the second optical ring at a second interconnect node of the second optical ring;
receiving the filtered traffic in the first sub-band from the second interconnect node at the first interconnect node of the first optical ring for communication in the first optical ring; and
wherein the filtered traffic in the first sub-band is communicated to the first interconnect node without electrical conversion or amplification of the filtered traffic.

20. The method of Claim 14, further comprising:
selectively switching to the first optical ring traffic in the first sub-band from the second optical ring at the second interconnect node, wherein the second interconnect node comprises a hub node;
receiving the switched traffic in the first sub-band from the second optical ring at the first interconnect node for communication in the first optical ring; and
wherein the switched traffic in the first sub-band is communicated to the first interconnect node without electrical conversion or amplification of the filtered traffic.

21. A method for communicating traffic between optical rings, comprising:
communicating optical traffic through a first optical ring, the optical traffic comprising a plurality of sub-bands;
selectively switching, for communication to a second optical ring, traffic in a first sub-band from the first optical ring at a first interconnect node of the first optical ring;
receiving the switched traffic in the first sub-band from the first interconnect node at a second interconnect node of the second optical ring for communication in the second optical ring.

22. The method of Claim 21, wherein the switched traffic in the first sub-band is communicated to the second interconnect node without electrical conversion of the filtered traffic.

23. The method of Claim 21, wherein the switched traffic in the first sub-band is communicated to the second interconnect node without amplification of the filtered traffic.

24. The method of Claim 21, further comprising:
demultiplexing at the first interconnect node traffic received into its constituent sub-bands;
passing through for communication through the first interconnect node or switching to the second optical ring traffic in the plurality of sub-bands at a plurality of switch elements, each of the plurality of switch elements passing through or switching a respective sub-band; and
multiplexing traffic in each sub-band passed through for communication through the first interconnect node.

25. The method of Claim 21, further comprising selectively passing or terminating at a demux-mux unit individual channels of the switched traffic in the first sub-band before communication in the second optical ring.

26. The method of Claim 21, further comprising:
selectively switching, for communication to the first optical ring, traffic in the first sub-band from the second optical ring at a second interconnect node of the second optical ring;
receiving the switched traffic in the first sub-band from the second interconnect node at the first interconnect node of the first optical ring for communication in the first optical ring; and
wherein the switched traffic in the first sub-band is communicated to the first interconnect node without electrical conversion or amplification of the filtered traffic.

27. An optical network, comprising:
a first optical ring, a second optical ring and a third optical ring, each optical ring operable to communicate optical traffic comprising a plurality of sub-bands;
the first optical ring comprising:
a first sub-band interconnect node operable to filter traffic in a first sub-band from the first optical ring for communication to the second optical ring;
a second sub-band interconnect node operable to filter traffic in the first sub-band from the first optical ring for communication to the third optical ring;
the second optical ring comprising a third sub-band interconnect node, the third sub-band interconnect node operable to receive the filtered traffic in the first sub-band from the first sub-band interconnect node for communication in the second optical ring; and
the third optical ring comprising a fourth sub-band interconnect node, the fourth sub-band interconnect node operable to receive the filtered traffic in the first sub-band from the second sub-band interconnect node for communication in the third optical ring;
wherein the first sub-band interconnect node is operable to communicate the filtered traffic in the first sub-band to the third interconnect node without electrical conversion or amplification of the filtered traffic; and
wherein the second sub-band interconnect node is operable to communicate the filtered traffic in the first sub-band to the fourth sub-band interconnect node without electrical conversion or amplification of the filtered traffic.

28. The optical network of Claim 27, wherein the first and second sub-band interconnect nodes each comprise a plurality of cascaded sub-band filters operable to isolate received traffic in the first sub-band from continued communication on the first optical ring through the first and second sub-band interconnect nodes, respectively.
